# EUROPÄISCHE PATENTANMELDUNG

(11) **EP 1 832 812 A2**
(43) Veröffentlichungstag der Anmeldung: **12.09.2007**
(21) Anmeldenummer: 07004816.0
(22) Anmeldetag: 08.03.2007
(51) Int. Cl.: F23R 3/06, F23R 3/00

(54) **Gasturbinenbrennkammerwand mit Dämpfung von Brennkammerschwingungen**

(30) Priorität: 10.03.2006 DE 102006011247; 10.03.2006 DE 102006011248
(71) Anmelder: Rolls-Royce Deutschland Ltd & Co KG, 15827 Blankenfelde-Mahlow (DE)
(72) Erfinder: Gerendas, Miklós, Dr.-Ing., 15838 Am Mellensee (DE); Bake, Sebastian, Dr.-Ing., 12159 Berlin (DE)
(74) Vertreter: Weber, Joachim

(57) **Zusammenfassung**

Die Erfindung bezieht sich auf eine Gasturbinenbrennkammerwand mit einer äußeren Wandung und einer innneren Wandung, wobei die äußere Wandung (9) und die innere Wandung (10) im Wesentlichen parallel zueinander verlaufen und durch einen Zwischenraum (14) zueinander beabstandet sind und wobei die äußere Wandung (9) zur Zuführung von Kühlluft mit Zuströmausnehmungen (8) versehen ist und die innere Wandung (10) mit Ausnehmungen versehen ist, dadurch gekennzeichnet, dass die innere Wandung (10) mit Dämpfungsausnehmungen (17) versehen ist, deren jeweilige Mittelachse senkrecht zur inneren Wandung (10) angeordnet ist, sowie mit Kühlungsausnehmungen (18), deren jeweilige Mittelachse in einem Winkel zur inneren Wandung (10) geneigt ist.

## Beschreibung

Die Erfindung bezieht sich auf eine Gasturbinenbrennkammerwand gemäß den Merkmalen des Oberbegriffs des Hauptanspruchs.

Im Einzelnen bezieht sich die Erfindung auf eine Gasturbinenbrennkammerwand mit einer äußeren Wandung und einer inneren Wandung, die durch einen Zwischenraum zueinander beabstandet sind und jeweils mit Ausnehmungen zur Durchleitung von Luft versehen sind.

Die GB 2 309 296 A beschreibt einen zweischichtigen Wandaufbau einer mager-brennenden Gasturbinenbrennkammer mit einer akustisch dämpfenden Wirkung auf hochfrequente Brennkammerschwingungen (angegeben ist ein Frequenzband von 3 bis 9 kHz) bei gleichzeitiger Kühlung der Brennkammerwand. Beides wird durch die Bohrungen senkrecht durch die Wand erreicht. Die äußere, kalte Brennkammerwand erzeugt die Prallkühlstrahlen auf die innere, heiße Wand, die Bohrungen durch die innere, heiße Wand entlassen die Prallkühlluft in die Brennkammer und erzeugen die Dämpfungswirkung.

Die EP 0 576 435 B1 beschreibt eine Brennkammer mit einem zweischichtigen, in Kammern unterteilten Wandaufbau, wobei alle Bohrungen im flachen Winkel zur Oberfläche angeordnet sind.

Die US 6 907 736 beschreibt unter anderem einen parzellierten Dämpfer für eine Gasturbinenbrennkammer, welcher durch Abstimmung der Dicke der parzellierten Schicht auf die zu dämpfende Frequenz eine Hohlraumresonanz erzeugt und dadurch die Verbrennungsschwingung dämpft. Kühlung wird durch eingebettete Röhrchen in der äußeren, kalten Lage der Wandkonstruktion bereitgestellt, durch welche ein Fluid strömt (geschlossener Kreislauf des Kühlfluides, z.B. Wasserdampf).

Die Kühlung der Brennkammerwand muss durch die Prallkühlung auf der Rückseite der inneren, heißen Brennkammerwand sichergestellt werden, da eine brauchbare Dämpfungswirkung nur durch Löcher senkrecht durch die Brennkammerwand erreicht werden kann. Eine wirkungsvolle Filmkühlung ist durch eine solche Anordnung nur sehr begrenzt möglich. Wegen der mangelnden Kühlwirkung schränkt der Stand der Technik den Anwendungsbereich auf den Teil der Brennkammer ein, der sich im Bereich der divergenten Flammenfront befindet und somit nur einen Bruchteil der Brennkammerlänge abdeckt. Zusätzlich geht eine Dämpfungswirkung im kHz-Bereich (angegeben sind 3 bis 9 kHz) an den Anforderungen der Magerverbrennung vorbei, da die ersten Umfangsmoden bei den allgemein üblichen Ringbrennkammern je nach Größe im Bereich von 200 bis 1000 Hz liegen.

Eine Kühlung der Brennkammer durch ein anderes Fluid als Kompressoraustrittsluft, z.B. Wasserdampf, ist für ein Flugtriebwerk nicht praktikabel.

Der Erfindung liegt die Aufgabe zugrunde, eine Gasturbinenbrennkammerwand der eingangs genannten Art zu schaffen, welche bei einfachem Aufbau und einfacher, kostengünstiger Herstellbarkeit sowohl eine gute Kühlung als auch eine gute Dämpfung gewährleistet.

Erfindungsgemäß wird die Aufgabe durch die Merkmalskombination des Hauptanspruchs gelöst, die Unteransprüche zeigen weitere vorteilhafte Ausgestaltungen der Erfindung.

### Erfindungsgemäß ist somit Folgendes vorgesehen:

Die innere, heiße Brennkammerwand enthält zwei Typen von Ausnehmungen bzw. Bohrungen. Der erste Typ steht senkrecht zur Oberfläche der Brennkammer und ist für die Dämpfung verantwortlich. Der zweite Typ ist in einem geringen Winkel von zum Beispiel 15 bis 30° zur Oberfläche angeordnet und ist für die Kühlung verantwortlich. Beide Typen werden vom Zwischenraum zwischen heißer und kalter Seite der Brennkammerwand vom gleichen Druckniveau aus mit Luft versorgt, wobei der Zwischenraum auch ein oder mehrere Unterteilungen in Längs- oder Umfangsrichtung haben kann. Diese Unterteilungen erzeugen drei- oder mehreckige Kammern, die sich zwar im Druckniveau untereinander unterscheiden können, aber aus jeder einzelnen Kammer werden senkrechte Dämpfungsbohrungen und im flachen Winkel zur Oberfläche angebrachte Kühlungsbohrungen mit Luft versorgt. Da die gesamte Oberfläche der Brennkammer gekühlt werden muss, enthält jede Kammer mindestens eine Kühlungsbohrung unter flachem Winkel zur Oberfläche. Die Dämpfungswirkung der senkrechten Dämpfungsbohrungen hängt von den akustischen Eigenmoden der Brennkammer ab, somit würden Dämpfungsbohrungen in bestimmten Bereichen der Brennkammer kaum Wirkung zeigen, daher enthalten die Kammern keine, eine oder mehrere Dämpfungsbohrungen, je nach ihrer Position innerhalb der Brennkammer .

Die Brennkammerwand enthält somit erfindungsgemäß zwei Typen von Parzellen, welche von Kompressoraustrittsluft durchströmt werden (also auf beiden Seiten Öffnungen haben) und unterschiedliche geometrische Formen annehmen können, z.B. drei-, vier- oder sechseckig. In beiden Parzellentypen können Gruppen mit ein oder mehreren Bohrungen je Seite angeordnet sein. Der erste Typ enthält Bohrungen auf der heißen Seite der Brennkammerwand, welche senkrecht zur Oberfläche der Brennkammer stehen, und diese Parzelle ist für die Dämpfung von Brennkammerschwingungen verantwortlich. Der zweite Typ enthält Bohrungen auf der heißen Seite der Brennkammerwand, welche in einem geringen Winkel von z.B. 15 bis 30° zur Oberfläche angeordnet sind, und ist für die Kühlung verantwortlich. Die Zuströmung in die jeweilige Parzelle erfolgt in der Regel durch senkrechte Bohrungen auf der kalten Seite der Brennkammerwand. Durch die Funktionentrennung von Kühl- und Dämpfungsparzellen kann das Druckniveau zur Speisung der heißgasseitigen Austrittsöffnungen durch eine entsprechende Wahl der effektiven Strömungsflächen am Eintritt und Austritt der Parzelle für beide Typen unterschiedlich eingestellt werden. Die Parzellen haben entweder jeweils die gleiche geometrische Form mit mindestens drei Ecken (oder vier oder mehr Ecken) oder aber voneinander unterschiedliche Formen.

### Erfindungsgemäß ergeben sich folgende Vorteile:

Da die Dämpfungslöcher keine Kühlwirkung mehr erzeugen müssen (wozu sie nur in einem sehr begrenzten Umfang geeignet sind), kann die Durchströmung der Dämpfungslöcher so weit abgesenkt werden (in Abstimmung der Lochdurchmesser in der heißen und kalten Schicht der Brennkammerwand zur Reduzierung der Druckdifferenz zwischen Plenum und Brennkammerinnenraum), dass sie auch bei Frequenzen unterhalb von einem kHz nennenswerte Dämpfungswirkung erzeugen. Die notwendige Kühlung der Wand wird durch die im flachen Winkel zur Oberfläche angestellten Bohrungen erzeugt.

Um trotz der abgesenkten Druckdifferenz über die Kühlungsbohrungen einen hinreichenden Kühlluftmassenstrom zu erhalten, wird die effektive Fläche der Kühlungsbohrungen entsprechend durch eine Erhöhung der Anzahl und des Durchmessers der Bohrungen erhöht.

Die Unterteilungen des Plenums dienen zur Verhinderung von axialen oder lateralen Ausgleichsströmungen im Plenum, die durch das Druckfeld in der Brennkammer erzeugt werden könnten. Daher orientieren sich die Unterteilungen an diesem Druckfeld.

Erfindungsgemäß wird kein weiteres Fluid zur Kühlung verwendet. Die Dämpfungsausnehmungen müssen keine Kühlwirkung mehr erzeugen. Durch die Funktionentrennung kann die Strömungsgeschwindigkeit in der brennkammerseitigen Austrittsöffnung für die jeweilige Funktion des Parzellentyps durch Abstimmung der Lochdurchmesser in der heißen und kalten Seite der Parzelle optimal eingestellt werden. Daher kann die Strömungsgeschwindigkeit in den Dämpfungsausnehmungen so weit abgesenkt werden (durch Reduzierung der Druckdifferenz zwischen Dämpfungsparzelle und Brennkammerinnenraum), so dass sie auch bei Frequenzen unterhalb von 1 kHz eine nennenswerte Dämpfungswirkung erzeugen. Die notwendige Kühlung der Wand wird durch die Gruppen von im flachen Winkel zur Oberfläche angestellten Bohrungen der Kühlungsparzellen erzeugt.

Die Kühl- und Dämpfungsparzellen können entlang der Brennkammerwand je nach lokaler Dämpfungs- und Kühlungsanforderung platziert werden. Die Kühlparzellen werden an den heißeren Stellen in einem dichteren Muster platziert. Die Dämpfungsparzellen werden entsprechend der akustischen Modenformen in der Brennkammer zur Erreichung einer optimalen Dämpfung der Brennkammerschwingungen platziert.

Im Folgenden wird die Erfindung anhand eines Ausführungsbeispiels in Verbindung mit der Zeichnung beschrieben. Dabei zeigt:
- Fig. 1: eine schematische Seiten-Schnittansicht einer erfindungsgemäßen Gasturbinenbrennkammer,
- Fig. 2: eine Teil-Schnittansicht eines erfindungsgemäßen Ausführungsbeispiels der Gasturbinenbrennkammerwand,
- Fig. 3: eine Ansicht einer Ausgestaltung der erfindungsgemäßen Brennkammerwand in radialer Richtung,
- Fig. 4: eine Teil-Schnittansicht eines weiteren erfindungsgemäßen Ausführungsbeispiels der Gasturbinenbrennkammerwand,
- Fig. 5: eine Draufsicht auf einen ersten Dämpfungsparzellentyp gemäß Fig. 4,
- Fig. 6: eine Draufsicht auf einen zweiten, Kühlungsparzellentyp gemäß Fig. 4, und
- Fig. 7: eine Ansicht einer erfindungsgemäßen Brennkammerwand gemäß Fig. 4 bis 6 in radialer Richtung.

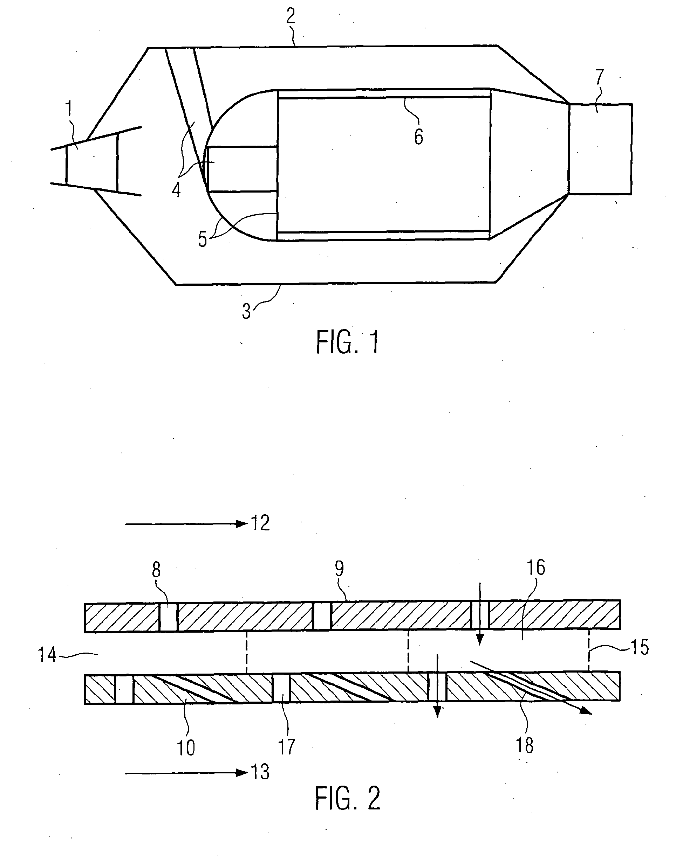

Die Fig. 1 zeigt in schematischer Darstellung einen Kompressorauslass 1 mit Schaufeln sowie ein Brennkammeraußengehäuse 2 und ein Brennkammerinnengehäuse 3. Das Bezugszeichen 4 bezeichnet einen Brenner mit Arm und Kopf. Der Brennkammerkopf ist schematisch mit dem Bezugszeichen 5 bezeichnet, an ihn schließt sich eine mehrschichtige Brennkammerwand 6 an. Weiterhin sind mit dem Bezugszeichen 7 in schematischer Weise Turbineneinlassschaufeln bezeichnet.

Die Fig. 2 zeigt zunächst mit dem Pfeil 12 die Strömung der Kompressoraustrittsluft sowie mit dem Pfeil 13 die Strömungsrichtung der Flamme und des Rauchgases. Eine äußere, kalte Brennkammerwand 9 und eine innere, heiße Brennkammerwand 10 bilden die mehrschichtige Mehrkammerwand 6 gemäß Fig. 1. Die Brennkammerwände 9 und 10 sind im Wesentlichen parallel zueinander angeordnet und durch einen Zwischenraum 14 beabstandet. In der äußeren, kalten Brennkammerwand 9 sind eine Vielzahl von Zuströmausnehmungen 8 ausgebildet, deren Mittelachsen senkrecht zur Ebene der Brennkammerwand 9 angeordnet sind.

Mittels mehrerer Unterteilungswände 15 wird der Zwischenraum 14 in mehrere Kammern 16 unterteilt.

Die innere, heiße Brennkammerwand 10 umfasst Dämpfungsausnehmungen 17, deren Mittelachsen senkrecht zur Ebene der inneren Brennkammerwandung 10 angeordnet sind, sowie in einem Winkel angeordnete Kühlungsausnehmungen 18. Die Dimensionierung der Durchmesser der Dämpfungsausnehmungen 17 und der Kühlungsausnehmungen 18 können den jeweiligen Anforderungen angepasst werden, sie richten sich nach der Lage innerhalb der Brennkammer sowie nach den dort auftretenden Kühlungsbedingungen bzw. Schwingungsbedingungen, welche gedämpft werden sollen.

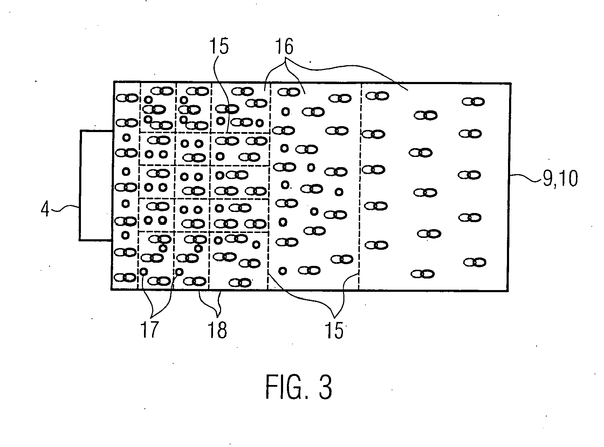

Die Fig. 3 zeigt eine Ansicht der Brennkammerwandung in radialer Richtung. Dabei ist ersichtlich, dass mittels in Längsrichtung angeordneter bzw. in Umfangsrichtung angeordneter Unterteilungswandungen 15 mehrere hinsichtlich ihrer Größe und ihrer Ausrichtung unterschiedliche Kammern 16 gebildet sind. Durch eine entsprechende Ausrichtung der Wandungen (15) können Kammern (16) mit drei, vier oder mehr Ecken gebildet werden. Weiterhin ist ersichtlich, dass die Dämpfungsausnehmungen 17 und die Kühlungsausnehmungen 18 jeweils unterschiedlich dicht verteilt sind, so dass sowohl die Anzahl und Größe der Kammern 16 als auch die Belegung der Kammern 16 mit den Dämpfungsausnehmungen 17 und den Kühlungsausnehmungen 18 den jeweiligen Bedingungen angepasst sind.

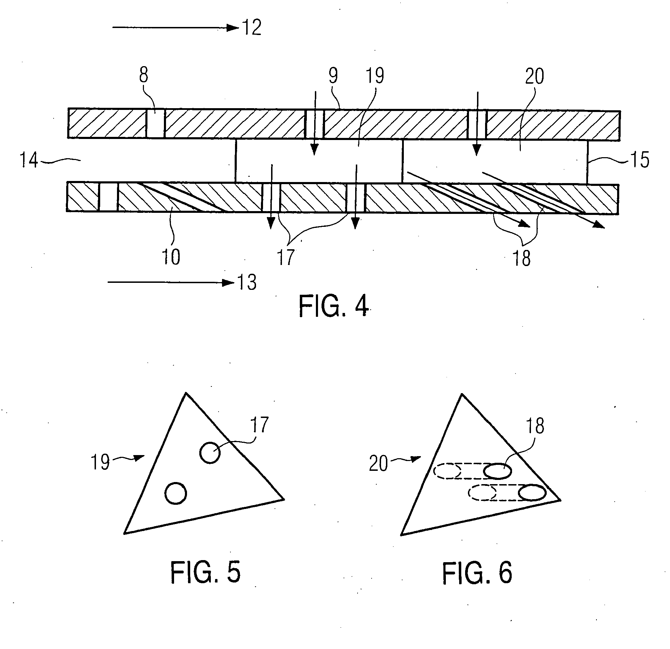

Die Fig. 4 zeigt zunächst mit dem Pfeil 12 die Strömung der Kompressoraustrittsluft sowie mit dem Pfeil 13 die Strömungsrichtung der Flamme und des Rauchgases. Eine äußere, kalte Brennkammerwand 9 und eine innere, heiße Brennkammerwand 10 bilden die mehrschichtige Mehrkammerwand 6 gemäß Fig. 1. Die Brennkammerwände 9 und 10 sind im Wesentlichen parallel zueinander angeordnet und durch einen Zwischenraum 14 beabstandet. In der äußeren, kalten Brennkammerwand 9 sind eine Vielzahl von Zuströmausnehmungen 8 ausgebildet, deren Mittelachsen senkrecht zur Ebene der Brennkammerwand 9 angeordnet sind.

Mittels mehrerer Unterteilungswände 15 wird der Zwischenraum 14 in mehrere Kammern 16 unterteilt.

Die innere, heiße Brennkammerwand 10 umfasst Dämpfungsausnehmungen 17, deren Mittelachsen senkrecht zur Ebene der inneren Brennkammerwandung 10 angeordnet sind, sowie in einem Winkel angeordnete Kühlungsausnehmungen 18. Die Dimensionierung der Durchmesser der Dämpfungsausnehmungen 17 und der Kühlungsausnehmungen 18 können den jeweiligen Anforderungen angepasst werden, sie richten sich nach der Lage innerhalb der Brennkammer sowie nach den dort auftretenden Kühlungsbedingungen bzw. Schwingungsbedingungen, welche gedämpft werden sollen.

Die Fig. 5 und 6 zeigen jeweils Ansichten der beiden Typen von Parzellen. In diesem Beispiel sind die Parzellen dreieckig ausgebildet, sie können, wie bereits erwähnt, rechteckig, sechseckig, rhombusartig oder in sonstiger Weise ausgestaltet sein. Die Fig. 5 zeigt eine Parzelle 19, in welcher zwei Dämpfungsausnehmungen 17 angeordnet sind. Es handelt sich somit um einen Dämpfungstyp einer Parzelle. Demgegenüber zeigt die Fig. 6 einen Kühlungstyp einer Parzelle 20, in welcher geneigte Kühlungsausnehmungen 18 vorgesehen sind.

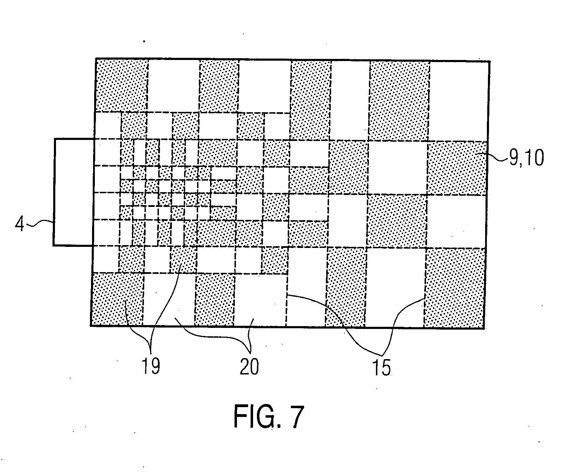

Die Fig. 7 zeigt eine Seitenansicht einer Brennkammerwand in radialer Richtung. Daraus ist zu ersehen, dass die Unterteilungswandungen 15 in dem in Fig. 7 gezeigten Ausführungsbeispiel rechteckige bzw. quadratische Parzellen erzeugen bzw. definieren. Diese unterscheiden sich hinsichtlich ihrer Ausgestaltung, so dass Parzellen 19, welche zur Dämpfung, sowie Parzellen 20, welche zur Kühlung dienen, in einem vorbestimmten Muster angeordnet sind. Dieses Muster richtet sich nach der Bauart und den Betriebsbedingungen der Gasturbinenbrennkammer und kann entsprechend modifiziert und optimiert werden.

### Bezugszeichenliste

- 1: Kompressorauslass mit Schaufeln
- 2: Brennkammeraußengehäuse
- 3: Brennkammerinnengehäuse
- 4: Brenner mit Arm und Kopf
- 5: Brennkammerkopf
- 6: Mehrschichtige Brennkammerwand
- 7: Turbineneinlassschaufeln
- 8: Zuströmausnehmung
- 9: Äußere, kalte Brennkammerwand
- 10: Innere, heiße Brennkammerwand
- 11 12: Kompressoraustrittsluft
- 13: Flamme und Rauchgas
- 14: Zwischenraum zwischen heißer (10) und kalter (9) Brennkammerwand
- 15: Unterteilungswand
- 16: Kammer
- 17: Dämpfungsausnehmung
- 18: Kühlungsausnehmung
- 19: Dämpfungsparzelle
- 20: Kühlungsparzelle

## Patentansprüche

1. Gasturbinenbrennkammerwand mit einer äußeren Wandung und einer innneren Wandung, wobei die äußere Wandung (9) und die innere Wandung (10) im Wesentlichen parallel zueinander verlaufen und durch einen Zwischenraum (14) zueinander beabstandet sind und wobei die äußere Wandung (9) zur Zuführung von Kühlluft mit Zuströmausnehmungen (8) versehen ist und die innere Wandung (10) mit Ausnehmungen versehen ist, **dadurch gekennzeichnet, dass** die innere Wandung (10) mit Dämpfungsausnehmungen (17) versehen ist, deren jeweilige Mittelachse senkrecht zur inneren Wandung (10) angeordnet ist, sowie mit Kühlungsausnehmungen (18), deren jeweilige Mittelachse in einem Winkel zur inneren Wandung (10) geneigt ist.

2. Gasturbinenbrennkammerwand nach Anspruch 1, **dadurch gekennzeichnet, dass** die Kühlungsausnehmungen (18) in einem Winkel von 15 bis 30° geneigt angeordnet sind.

3. Gasturbinenbrennkammerwand nach Anspruch 1 oder 2, **dadurch gekennzeichnet, dass** der Zwischenraum (14) im Wesentlichen in Strömungsrichtung mit Unterteilungswänden (15) zur Ausbildung von Kammern (16) versehen ist.

4. Gasturbinenbrennkammerwand nach Anspruch 1 bis 3, **dadurch gekennzeichnet, dass** der Zwischenraum (14) im Wesentlichen in Umfangsrichtung mit Unterteilungswänden (15) zur Ausbildung von Kammern (16) versehen ist.

5. Gasturbinenbrennkammerwand nach einem der Ansprüche 1 bis 3, **dadurch gekennzeichnet, dass** der Zwischenraum (14) durch Unterteilungswände (15) in Kammern mit drei oder mehr Ecken unterteilt wird.

6. Gasturbinenbrennkammerwand nach einem der Ansprüche 3 bis 5, **dadurch gekennzeichnet, dass** in jeder Kammer (16) zumindest eine Kühlungsausnehmung (18) angeordnet ist.

7. Gasturbinenbrennkammerwand nach einem der Ansprüche 1 bis 6, **dadurch gekennzeichnet, dass** in jeder Kammer (16) zumindest eine Dämpfungsausnehmung (17) angeordnet ist.

8. Gasturbinenbrennkammerwand nach einem der Ansprüche 1 bis 6, **dadurch gekennzeichnet, dass** in jeder Kammer (16) mehrere Dämpfungsausnehmungen angeordnet sind.

9. Gasturbinenbrennkammerwand nach einem der Ansprüche 1 bis 6, **dadurch gekennzeichnet, dass** in einzelnen Kammern (16) keine Dämpfungsausnehmungen (17) vorgesehen sind.

10. Gasturbinenbrennkammerwand nach einem der Ansprüche 1 bis 9, **dadurch gekennzeichnet, dass** der Zwischenraum (14) zwischen der äußeren Wandung (9) und der inneren Wandung (10) in Parzellen (19, 20) unterteilt ist, wobei in einem ersten Typ von Parzellen (19) zumindest eine Dämpfungsausnehmung (17) und in einem zweiten Typ von Parzellen (20) zumindest eine Kühlungsausnehmung (18) angeordnet sind.

11. Gasturbinenbrennkammerwand nach Anspruch 10, **dadurch gekennzeichnet, dass** alle Typen von Parzellen (19, 20) die gleiche drei- oder mehreckige geometrische Form aufweisen.

12. Gasturbinenbrennkammerwand nach Anspruch 10, **dadurch gekennzeichnet, dass** die Parzellen (19, 20) zumindest teilweise voneinander unterschiedliche geometrische Formen aufweisen.

13. Gasturbinenbrennkammerwand nach einem der Ansprüche 10 bis 12, **dadurch gekennzeichnet, dass** die Dämpfungsausnehmungen (17) senkrecht zur Ebene der Brennkammerwandung (9, 10) angeordnet sind.

14. Gasturbinenbrennkammerwand einem der Ansprüche 10 bis 13, **dadurch gekennzeichnet, dass** die Kühlungsausnehmungen (18) in einem Winkel von 15 bis 30° geneigt angeordnet sind.

15. Gasturbinenbrennkammerwand nach einem der Ansprüche 10 bis 14, **dadurch gekennzeichnet, dass** in jeder Parzelle (19, 20) zumindest eine Kühlungsausnehmung (18) bzw. eine Dämpfungsausnehmung (19) angeordnet ist.
